# FASCICULE DE BREVET EUROPEEN

(11) **EP 2 158 118 B1**
(45) Date de publication et mention de la délivrance du brevet: **02.11.2011**
(21) Numéro de dépôt: 08805821.9
(22) Date de dépôt: 21.05.2008
(51) Int. Cl.: B62D 25/14, B62D 25/04, B62D 25/08, B62D 21/15

(54) **STRUCTURE DE CAISSE DE VEHICULE AUTOMOBILE**
STRUKTUR FÜR EINE MOTORFAHRZEUGKAROSSERIE
MOTOR VEHICLE BODY STRUCTURE

(30) Priorité: 25.06.2007 FR 0755991
(43) Date de publication de la demande: 03.03.2010
(73) Titulaire: Peugeot Citroën Automobiles SA, 78140 Vélizy-Villacoublay (FR)
(72) Inventeur: DESPLANCHES, Patrice, F-78100 Saint Germain En Laye (FR); BRETON, Clément, F-13100 Aix En Provence (FR)
(86) Numéro de dépôt international: PCT/FR2008/050875
(87) Numéro de publication internationale: WO 2009/000988

(56) Documents cités:
- FR-A- 2 757 473
- FR-A- 2 850 945
- FR-A- 2 851 981

## Description

La présente invention est relative à une structure de caisse de véhicule automobile, cette caisse comprenant une base et une superstructure et, en partie avant, des premier et deuxième pieds avant gauche et droit respectivement liant la base à la superstructure, chacun des pieds comprenant un côté d'habitacle sur lequel est fixé au moins un renfort de pied, cette structure comprenant en outre une traverse de planche de bord. Le document FR2850945 décrit une telle structure selon le préambule de la revendication 1.

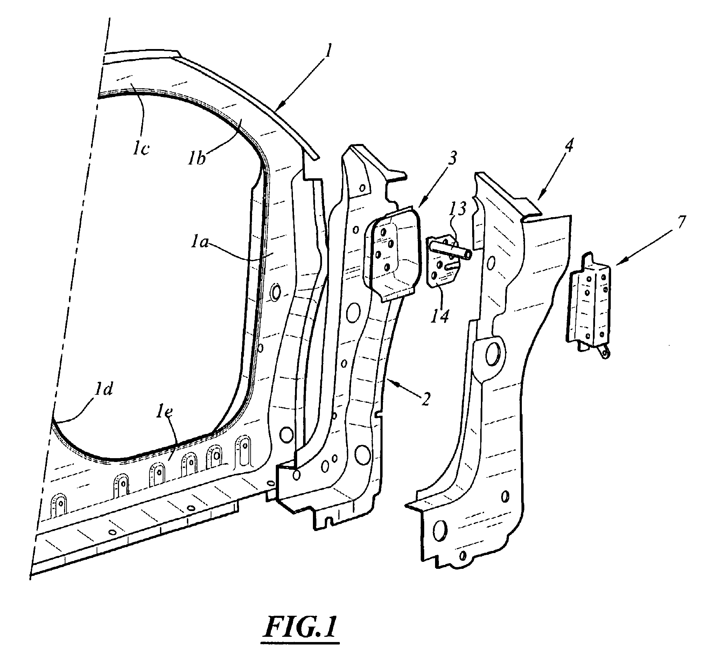

Sur la vue en perspective éclatée de la figure 1 du dessin annexé, on a représenté la partie du côté d'habitacle 1 de cette structure qui correspond à l'encadrement de la porte avant gauche (non représentée) du véhicule. Cet encadrement comprend ainsi un pied avant gauche, un montant de baie de pare-brise, une arche de pavillon, un pied central et un longeron inférieur qui se situent au niveau des parties 1a, 1b, 1c, 1d, et 1e du côté d'habitacle 1 représenté, respectivement.

La partie 1a du côté d'habitacle est conformée pour accueillir complémentairement un renfort de pied avant gauche 2 et ce dernier est lui-même conformé pour recevoir un renfort supérieur de charnière 3, en forme de cuvette comme représenté, le fond de ce renfort 3 étant soudé sur le renfort de pied avant 2.

Une doublure arrière d'aile avant gauche 4 est conformée pour s'appliquer sur les renforts 2 et 3 dans la structure assemblée. Cette doublure est elle-même solidaire d'une poutre, appelée brancard, s'étendant vers l'avant du véhicule, par l'intermédiaire d'un tablier inférieur et d'une traverse latérale de tablier fixée sur cette doublure. Toutes ces dispositions sont bien connues de l'homme de métier.

Lors d'un choc frontal du véhicule avec un obstacle placé sur sa trajectoire, on observe que les efforts qui se propagent dans la structure du véhicule, notamment ceux qui se propagent jusqu'au pied avant de la structure par l'intermédiaire du brancard, du tablier inférieur et de la traverse de tablier, appliquent au pied avant un couple qui peut provoquer une rotation, avec déformation, du pied autour d'un axe sensiblement vertical. Cette déformation du pied a pour effet de faire sortir la porte de son encadrement, vers l'extérieur du véhicule.

Une telle déformation est évidemment fonction de l'importance du choc et de la position de l'impact. C'est ainsi que l'on observe que les effets du choc sont plus importants quand cette position est décalée par rapport à l'axe du véhicule.

La sortie de la porte de son encadrement a notamment pour effet de priver la superstructure du véhicule de la voie d'effort reliant le pied avant au pied central de cette superstructure, à travers une frise de cette porte. Le pied central ne peut plus alors participer à l'absorption des efforts en cause.

La présente invention a donc pour but de réaliser une structure de caisse de véhicule automobile conçue pour supprimer, ou du moins limiter, la rotation d'un pied avant de sa superstructure et l'affaissement de porte qui en résulte, lors d'un choc frontal.

Ce but est atteint, selon l'invention grâce à une structure telle que définie dans la revendication 1.

La voie d'effort nouvelle ainsi établie permet de supprimer, ou du moins de limiter, la rotation du pied avant, et donc de maintenir une voie d'effort vers le pied central de la superstructure, à travers la porte maintenue dans son encadrement.

Suivant d'autres caractéristiques de la présente invention :
- le renfort de pied avant comprend un renfort supérieur de charnière de porte du véhicule en forme de cuvette, la vis traversant ce renfort,
- le renfort de pied avant est accolé et solidaire d'une doublure arrière d'aile avant du véhicule, l'ensemble vis-écrou serrant la traverse de planche de bord contre une pièce de liaison interposée entre la traverse et la doublure arrière d'aile avant,
- l'écrou est associé à un moyen de rattrapage de jeu,
- le moyen de rattrapage de jeu est constitué par une noix filetée extérieurement de manière à passer dans l'écrou, lui-même fixé sur la traverse de planche de bord, et filetée intérieurement pour coopérer avec la vis,
- l'entretoise est tubulaire,
- l'entretoise tubulaire est solidaire d'une romaine de fixation de charnière soudée dans le renfort supérieur de charnière,
- l'entretoise s'étend dans le renfort vers la pièce de liaison, un jeu minimum séparant l'extrémité libre de l'entretoise de la pièce de liaison.

D'autres caractéristiques et avantages de la présente invention apparaîtront à la lecture de la description qui va suivre et à l'examen du dessin annexé dans lequel :
- la figure 1 est une vue perspective éclatée d'une partie de la structure de caisse de véhicule automobile suivant l'invention, cette vue ayant déjà été partiellement décrite en préambule de la présente description, et
- la figure 2 est une vue schématique, en coupe transversale, d'un pied avant de la structure suivant l'invention.

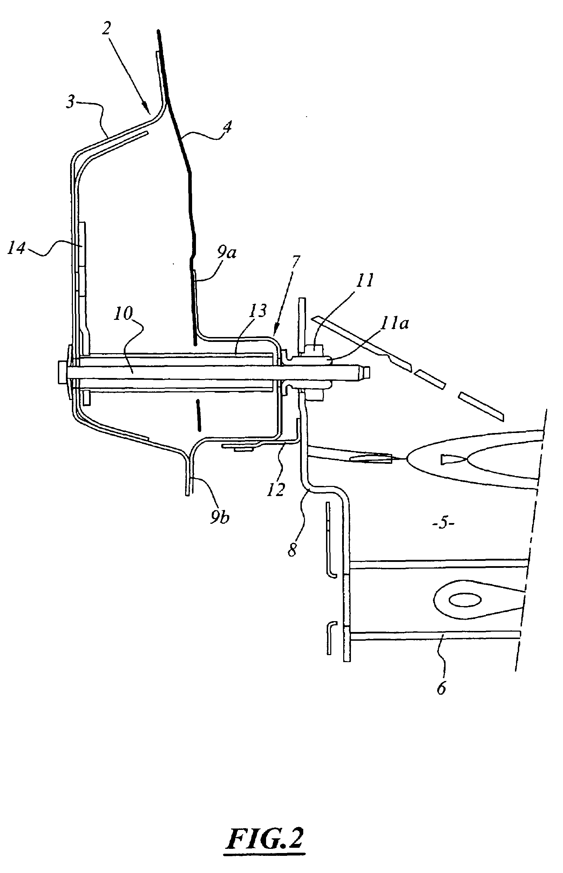

On se réfère à la figure 2 du dessin annexé où l'on retrouve, en coupe selon un plan sensiblement horizontal, le renfort supérieur de charnière 3 en forme de cuvette et la doublure arrière 4 d'aile avant représentés dans la vue éclatée de la figure 1. La référence 5 repère généralement une traverse de planche de bord disposée classiquement pour rigidifier transversalement la superstructure de la caisse du véhicule au niveau de la planche de bord, notamment grâce à au moins une pièce tubulaire telle que celle référencée 6, d'axe transversal à l'axe longitudinal de la structure.

Sur la figure 2 apparaît encore une pièce de liaison 7 interposée entre la doublure arrière d'aile avant 4 et une plaque d'extrémité 8 de la traverse de planche de bord 5, soudée sur la pièce tubulaire 6. Cette pièce de liaison 7, complètement représentée sur la figure 1, présente une section en forme de gouttière et comprend deux rebords latéraux 9a et 9b conformés pour s'appuyer sur le pied avant, au niveau du renfort supérieur de charnière 3.

Cette pièce de liaison contribue classiquement au support d'un tableau de bord du véhicule.

Suivant la présente invention, des moyens sont prévus pour lier rigidement le renfort de pied avant 2 et la traverse de planche de bord. Comme représenté sur la figure 2 ces moyens comprennent essentiellement un ensemble constitué d'une vis 10 et d'un écrou 11, la vis 10 traversant le renfort supérieur de charnière 3, la doublure 4 et la plaque d'extrémité de la pièce de liaison 7 suivant un axe parallèle à celui de la pièce tubulaire 6 de la traverse de planche de bord 5.

Sur la figure 2 il apparaît qu'un jeu existe entre la pièce de liaison 7 et la plaque d'extrémité 8 de la traverse de planche de bord 5. L'écrou 11 est alors associé à un moyen permettant de rattraper ce jeu. A cet effet il est traversé par une noix 11a filetée extérieurement pour pouvoir tourner dans l'écrou 11 en se déplaçant axialement dans celui-ci. La noix 11a est aussi filetée intérieurement pour pouvoir coopérer avec le filetage de la vis 10. L'écrou 11 est fixé, avantageusement par soudage, sur la plaque d'extrémité 8 de la traverse de planche de bord 5, en face d'un trou percé dans cette plaque.

Pour lier rigidement le renfort de pied avant 2,3 à la traverse de planche de bord 5, on passe la vis 10 à travers ce renfort et dans la noix 11a. Une patte d'appui 12 soudée sur la plaque d'extrémité 8 de la traverse de planche de bord aide au centrage de la pièce de liaison 7 et de la vis 10 sur la noix 11a.

La traction alors exercée par la vis 10 sur la noix 11a fait tourner cette dernière dans l'écrou 11, fixe. La noix se déplace alors sur l'axe de la vis jusqu'à venir en butée sur la pièce de liaison 7, rattrapant ainsi le jeu J.

Le jeu J rattrapé et la vis 10 fermement serrée, on comprend que cette dernière se comporte comme une broche traversant le renfort de pied pour prolonger dans celui-ci les effets de la fonction de rigidification transversale développée par la traverse de planche de bord 5. Cette broche et cette traverse s'opposent ainsi aux efforts transmis au pied avant lors d'un choc frontal et tendant à faire tourner ce pied autour d'un axe vertical, tout en créant une voie d'écoulement de ces efforts vers cette traverse.

On supprime ainsi, ou du moins on limite fortement, toute rotation du pied avant lors d'un choc frontal. La porte adjacente reste alors dans son encadrement pour assurer le maintien de la voie d'effort, dont elle fait partie, vers le pied central de la superstructure qui peut alors jouer son rôle dans l'absorption de ces efforts conformément au but de l'invention annoncé plus haut.

Avantageusement, comme cela apparaît sur la figure 2, la vis 10 traverse une entretoise 13 qui contribue à la rigidité du brochage obtenu, comme on va l'expliquer dans la suite. Cette entretoise 13, tubulaire par exemple, est portée par une plaque 14, ou "romaine", soudée sur la face intérieure du fond du renfort supérieur de charnière 3 pour coopérer à la fixation d'une charnière de porte avant (non représentée) sur la face extérieure du pied avant de la superstructure de la caisse du véhicule, au niveau du renfort supérieur de charnière. L'entretoise 13 est soudée par une extrémité sur la romaine 14, autour d'un perçage formé dans cette romaine pour laisser passer la vis 10.

L'entretoise 13 s'étend dans le renfort 3 et dans la pièce de liaison 7 perpendiculairement au plan moyen de la romaine 14. Sa longueur est calculée pour qu'il ne demeure qu'un jeu minimum (très exagéré sur la figure 2 pour la clarté du dessin) entre son extrémité libre et la surface adjacente de la pièce de liaison, une fois l'assemblage terminé.

On comprend que la présence de cette entretoise 13 renforce la rigidité de cet assemblage vis-à-vis des efforts qui se développent lors d'un choc frontal. Elle évite notamment l'écrasement du corps creux traversé par la vis et s'oppose à des efforts qui seraient susceptibles de provoquer un flambage de la vis 10, en l'absence de l'entretoise 13.

L'entretoise permet encore de faire usage d'une vis de faible diamètre, à filetage M8 par exemple. Enfin elle sert à guider la vis 10 lors de l'assemblage du pied avant de la superstructure.

Il est clair que la superstructure de caisse de véhicule suivant l'invention est normalement équipée de moyens de rigidification du pied avant droit symétriques de ceux décrits ci-dessus pour le pied avant gauche.

Il apparaît maintenant que l'invention permet bien d'atteindre le but annoncé, à savoir renforcer la résistance d'un pied avant de la superstructure d'un véhicule automobile à des efforts tendant, lors d'un choc frontal, à faire tourner ce pied autour d'un axe vertical avec pour conséquence l'ouverture de la porte adjacente et la coupure dommageable qui en résulte de la voie d'effort vers le pied central de la superstructure qui passe par cette porte lorsque celle-ci est fermée.

Bien entendu l'invention n'est pas limitée au mode de réalisation décrit et représenté qui n'a été donné qu'à titre d'exemple. C'est ainsi que les moyens de rigidification des renforts de pieds avant décrits ci-dessus pourraient être intégrés à la traverse de planche de bord plutôt que reliés à celle-ci par vissage.

## Revendications

1. Structure de caisse de véhicule automobile, ladite caisse comprenant une base et une superstructure et, en partie avant, des premier et deuxième pieds avant gauche et droit respectivement liant ladite base à ladite superstructure, chacun desdits pieds comprenant un côté d'habitacle (1) sur lequel est fixé au moins un renfort de pied (2), ladite structure comprenant en outre une traverse de planche de bord (5), la structure comprenant des moyens (10,11) pour lier rigidement ledit renfort (2) d'au moins un desdits pieds et ladite traverse (5), propres à assurer une transmission, vers ladite traverse (5), d'efforts subis par ledit pied lors d'un choc frontal subi par ledit véhicule, lesdits moyens de liaison rigide étant constitués par un ensemble vis-écrou (10, 11) traversant ledit renfort (2) parallèlement à l'axe de ladite traverse (5), structure **caractérisé en ce que** ladite vis (10) passe librement dans une entretoise (13).

2. Structure conforme à la revendication 1, dans laquelle ledit renfort de pied avant (2) comprend un renfort supérieur (3) de charnière de porte dudit véhicule en forme de cuvette, **caractérisée en ce que** ladite vis (10) traverse ledit renfort (3).

3. Structure conforme à la revendication 2, dans laquelle ledit renfort de pied avant (2) est accolé et solidaire d'une doublure arrière (4) d'aile avant dudit véhicule, **caractérisée en ce que** ledit ensemble vis-écrou (10,11) serre ladite traverse (5) de planche de bord contre une pièce de liaison (7) interposée entre ladite traverse (5) et ladite doublure arrière (4) d'aile avant.

4. Structure conforme à la revendication 3, **caractérisée en ce que** ledit écrou (11) est associé à un moyen (11 a) de rattrapage de jeu.

5. Structure conforme à la revendication 4, **caractérisée en ce que** ledit moyen de rattrapage de jeu est constitué par une noix (11a) filetée extérieurement de manière à passer dans ledit écrou (10), lui-même fixé sur ladite traverse (5) de planche de bord, et filetée intérieurement pour coopérer avec ladite vis (10).

6. Structure conforme à l'une quelconque des revendications précédentes, **caractérisée en ce que** ladite entretoise (13) est tubulaire.

7. Structure conforme à la revendication 6, c**aractérisée en ce que** ladite entretoise tubulaire (13) est solidaire d'une romaine (14) de fixation de charnière soudée dans ledit renfort supérieur (3) de charnière.

8. Structure conforme à la revendication 7, **caractérisée en ce que** ladite entretoise (13) s'étend dans ledit renfort supérieur (3) vers ladite pièce de liaison (7), un jeu minimum séparant l'extrémité libre de l'entretoise (13) de ladite pièce de liaison (7).

## Claims

1. Motor vehicle body structure, said body comprising a base and a superstructure and, in the front portion, first and second A-pillars, on the left and right respectively, connecting said base to said superstructure, each of said pillars comprising a passenger compartment side (1) to which at least one pillar reinforcement (2) is attached, said structure additionally comprising a dashboard cross-member (5), the structure comprising means (10,11) for rigidly connecting said reinforcement (2) to at least one of said pillars and said cross-member (5), which means are able to ensure a transmission, towards said cross-member (5), of forces to which said pillar is subjected in the case of a head-on collision suffered by said vehicle, said rigid connection means being formed by a nut and bolt assembly (10, 11) passing through said reinforcement (2) parallel to the axis of said cross-member (5), said structure being **characterised in that** said screw (10) passes freely into a spacer (13).

2. Structure according to claim 1, wherein said A-pillar reinforcement (2) comprises a bowl-shaped upper reinforcement (3) for the door hinge of said vehicle, **characterised in that** said screw (10) passes through said reinforcement (3).

3. Structure according to claim 2, wherein said A-pillar reinforcement (2) is adjacent to and integral with a rear lining (4) of the front wing of said vehicle, **characterised in that** said nut and bolt assembly (10, 11) presses said dashboard cross-member (5) against a connection part (7) interposed between said cross-member (5) and said rear lining (4) of the front wing.

4. Structure according to claim 3, **characterised in that** said nut (11) is associated with a clearance compensation means (11a).

5. Structure according to claim 4, **characterised in that** said clearance compensation means is formed by a yoke (11 a) which is externally threaded so as to pass into said nut (10), which is itself fixed on said dashboard cross-member (5), and internally threaded so as to cooperate with said screw (10).

6. Structure according to any one of the preceding claims, **characterised in that** said spacer (13) is tubular.

7. Structure according to claim 6, **characterised in that** said tubular spacer (13) is integral with a hinge attachment counter plate (14) welded in said hinge upper reinforcement (3).

8. Structure according to claim 7, **characterised in that** said spacer (13) extends in said upper reinforcement (3) towards said connection part (7), a minimum clearance separating the free end of the spacer (13) from said connection part (7).

## Patentansprüche

1. Kraftfahrzeug-Wagenkastenstruktur, wobei der Wagenkasten eine Grundlage und einen Aufbau und vorne erste und zweite linke und rechte vordere Füße umfasst, die jeweils die Grundlage mit dem Aufbau verbinden, wobei jeder der Füße eine Fahrgastzellenseite (1) umfasst, an der mindestens eine Fußverstärkung (2) befestigt ist, wobei die Struktur ferner eine Armaturenbrett-Querstrebe (5) umfasst, wobei die Struktur Mittel (10, 11) umfasst, um die Verstärkung (2) mindestens eines der Füße und die Querstrebe (5) starr zu verbinden, die dazu geeignet sind, eine Übertragung auf die Querstrebe (5) von Kräften sicherzustellen, die der Fuß bei einem Frontalaufprall erfährt, den das Fahrzeug erfährt, wobei die Mittel zur steifen Verbindung aus einer Schrauben-Mutter-Einheit (10, 11) bestehen, die durch die Verstärkung (2) parallel zur Achse der Querstrebe (5) geht, wobei die Struktur **dadurch gekennzeichnet ist, dass** die Schraube (10) frei in einen Querriegel (13) geht.

2. Struktur nach Anspruch 1, wobei die Verstärkung des vorderen Fußes (2) eine wannenförmige obere Verstärkung (3) eines Türscharniers des Fahrzeugs umfasst, **dadurch gekennzeichnet, dass** die Schraube (10) durch die Verstärkung (3) hindurch geht.

3. Struktur nach Anspruch 2, wobei die Verstärkung des vorderen Fußes (2) an einer hinteren Einlage (4) des vorderen Kotflügels des Fahrzeugs anliegt und damit fest verbunden ist, **dadurch gekennzeichnet, dass** die Schrauben-Mutter-Einheit (10, 11) die Armaturenbrett-Querstrebe (5) an ein Verbindungsteil (7) klemmt, das zwischen der Querstrebe (5) und der hinteren Einlage (4) des vorderen Kotflügels eingeschoben ist.

4. Struktur nach Anspruch 3, **dadurch gekennzeichnet, dass** die Mutter (11) mit einem Spielbeseitigungsmittel (11a) verknüpft ist.

5. Struktur nach Anspruch 4, **dadurch gekennzeichnet, dass** das Spielbeseitigungsmittel aus einem Anlauf (11a) mit Außengewinde besteht, so dass er in die Mutter (10) eingeht, die wiederum an der Armaturenbrett-Querstrebe (5) befestigt ist und ein Innengewinde aufweist, um mit der Schraube (10) zusammenzuwirken.

6. Struktur nach einem der vorhergehenden Ansprüche, **dadurch gekennzeichnet, dass** der Querriegel (13) röhrenförmig ist.

7. Struktur nach Anspruch 6, **dadurch gekennzeichnet, dass** der röhrenförmige Querriegel (13) mit einem Anschlag (14) zur Scharnierbefestigung, der in der oberen Scharnierverstärkung (3) eingeschweißt ist, fest verbunden ist.

8. Struktur nach Anspruch 7, **dadurch gekennzeichnet, dass** der Querriegel (13) sich in der oberen Verstärkung (3) in Richtung auf das Verbindungsteil (7) erstreckt, wobei ein minimales Spiel das freie Ende des Querriegels (13) von dem Verbindungsteil (7) trennt.
